(19) Europäisches Patentamt
European Patent Office
Office européen des brevets

(11) EP 2 306 557 B1

(12) **EUROPEAN PATENT SPECIFICATION**

(45) Date of publication and mention of the grant of the patent:
**03.01.2018 Bulletin 2018/01**

(51) Int Cl.:
***H01M 4/04*** *(2006.01)* ***H01M 10/0525*** *(2010.01)*
***H01M 4/485*** *(2010.01)* ***H01M 4/1391*** *(2010.01)*

(21) Application number: **10175921.5**

(22) Date of filing: **09.09.2010**

(54) **Negative active material, method of preparing same, and rechargeable lithium battering including same**

Negativ-Aktivmaterial, Herstellungsverfahren dafür und aufladbare Lithiumbatterie damit

Matériel actif négatif, son procédé de préparation, et batterie au lithium rechargeable l’incorporant

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **09.09.2009 US 240809 P**
**08.09.2010 US 877893**

(43) Date of publication of application:
**06.04.2011 Bulletin 2011/14**

(73) Proprietor: **Samsung SDI Co., Ltd.**
**Yongin-si, Gyeonggi-do 17084 (KR)**

(72) Inventor: **Eom, Ji-Yong**
**Gyeonggi-do (KR)**

(74) Representative: **Russell, Tim et al**
**Venner Shipley LLP**
**200 Aldersgate**
**London EC1A 4HD (GB)**

(56) References cited:
- **J.L. ALLEN, T.R. JOW, J. WOLFENSTINE: "Low temperature performance of nanophase Li4Ti5O12.", JOURNAL OF POWER SOURCES, vol. 159, 25 January 2006 (2006-01-25), pages 1340-1345, XP002607171, online**
- **JIANQIU DENG, ZHOUGUANG LU, I. BELHAROUAK, K. AMINE, C.Y. CHUNG: "Preparation and electrochemical properties of Li4Ti5O12.", JOURNAL OF POWER SOURCES, vol. 193, 18 April 2009 (2009-04-18), pages 816-821, XP002607170, online**
- **CHENG-MIN SHEN, XIAO-GANG ZHANG, YING-KE ZHOU, HU-LIN LI: "Preparation and characterisation of nanocrystaline Li4Ti5O12 by sol-gel method.", MATERIALS CHEMISTRY AND PHYSICS, vol. 78, 2002, pages 437-441, XP002607172,**
- **M. GANESAN: "Li4Ti2.5Cr2.5O12 as anode for lithium battery.", IONICS, vol. 14, 24 October 2007 (2007-10-24), pages 395-401, XP002607173, online**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 306 557 B1

## Description

The present invention relates to a negative active material for a rechargeable lithium battery, a method of preparing the same, and a rechargeable lithium battery including the same.

Rechargeable lithium batteries have recently drawn attention as a power source of small portable electronic devices. They use an organic electrolyte solution and thereby have twice the discharge voltage of a conventional battery using an alkali aqueous solution, and accordingly have high energy density.

For positive active materials of a rechargeable lithium battery, chalcogenide compounds that are composite metal oxides such as $LiCoO_2$, $LiMn_2O_4$, $LiNi_{1-x}Co_xO_2$ ($0<x<1$), and the like have been researched.

As for negative active materials of a rechargeable lithium battery, various carbon-based materials such as artificial graphite, natural graphite, and hard carbon, which can all intercalate and deintercalate lithium ions, have been used. Graphite of the carbon-based material increases discharge voltage and energy density of a battery because it has a low discharge potential of -0.2V, compared to lithium. A battery using graphite as a negative active material has a high average discharge potential of 3.6V and excellent energy density. Furthermore, graphite is most comprehensively used among the aforementioned carbon-based materials since graphite guarantees better cycle life for a battery due to its outstanding reversibility. However, a graphite active material has low density (theoretical density of 2.2 g/cc) and consequently low capacity in terms of energy density per unit volume when using the graphite as a negative active material. Further, it involves swelling or capacity reduction when a battery is misused or overcharged and the like, because graphite is likely to react with an organic electrolyte at a high discharge voltage.

In order to solve these problems, a great deal of research on non-carbon-based negative active materials has recently been performed. However, such an oxide negative electrode does not show a sufficient battery performance and therefore there has been a great deal of further research into oxide negative materials.

Allen et al. "Low temperature performance of nanophase Li4Ti5O12": Journal of Power Sources, vol 159, pp.1340-1345 discloses comparative studies of the low temperature performance of two samples of $Li_4Ti_5O_{12}$ of differing particle sizes, 700 nm and 350 nm. Jianqiu Deng et al. "Preparation and electrochemical properties of Li4Ti5O12": Journal of Power Sources, vol 193, pp.816-821 discloses spinel $Li_4Ti_5O_{12}$ thin film anode material for lithium-ion batteries prepared by pulsed laser deposition. Thin film anodes were deposited at ambient temperature, then annealed at three different temperatures under an argon gas flow and the influence of annealing temperatures on the electrochemical performance of the materials was studied. The optimum annealing temperature was found to be about 700°C.

Shen et al. "Preparation and characterisation of nanocrystalline Li4Ti5O12 by sol-gel method": Materials Chemistry and Physics, vol. 78, pp.437-441 discloses the synthesis of nanoscale $Li_4Ti_5O_{12}$ using a sol-gel method. Uniformly distributed $Li_4Ti_5O_{12}$ particles with grain sizes of 100 nm were synthesized.

According to a first aspect of the present invention, there is provided a negative active material for a rechargeable lithium battery, the negative active material comprising lithium titanium oxide having a full width at half maximum (FWHM) of $2\theta$ ranging from 0.08054° to 0.10067° at a (111) plane (main peak, $2\theta$ = 18.330°) as measured by X-ray diffraction (XRD) using a Cu $K\alpha$ ray. The lithium titanium oxide may have FWHM of $2\theta$ ranging from 0.08477° to 0.09475° at a (111) plane (main peak, $2\theta$ = 18.330°) as measured by X-ray diffraction using a Cu $K\alpha$-ray.

The lithium titanium oxide may be represented by the following chemical formula (I):

Chemical Formula (I) $$Li_{4-x-y}M_yTi_{5+x-z}M'_zO_{12}$$

In the above chemical formula (I), M is selected from La, Tb, Gd, Ce, Pr, Nd, Sm, Ba, Sr, Ca, Mg, or combinations thereof; M' is selected from V, Cr, Nb, Fe, Ni, Co, Mn, W, Al, Ga, Cu or combinations thereof; and x is from 0 to 1, y is from 0 to 1, and z is from 0 to 1.

The lithium titanium oxide may be represented by the following chemical formula (II).

Chemical Formula (II) $$Li_{4-x}Ti_{5+x}O_{12}$$

In the above Chemical Formula (II), x ranges from 0 to 1.

The lithium titanium oxide may be $Li_4Ti_5O_{12}$.

The lithium titanium oxide may have an average crystal size ranging from 80 nm (800Å) to 100 nm (1000Å). According to an embodiment, the lithium titanium oxide may have an average crystal size ranging from 85 nm (850Å) to 95 nm (950Å.).

According to a second aspect of the present invention, there is provided is a rechargeable lithium battery including a negative electrode including the negative active material according to the present invention in its first aspect, a positive electrode including a positive active material, and a non-aqueous electrolyte.

According to a third aspect of the present invention, there is provided a method of preparing a negative active material for a rechargeable lithium battery that includes heating a lithium titanium oxide precursor at 800°C to 850°C

under the inert atmosphere to provide a lithium titanium oxide, wherein the lithium titanium oxide precursor is heated for 5 to 10 hours under the inert atmosphere. The heat treatment may be carried out under the inert atmosphere selected from the group consisting of nitrogen, argon and combinations thereof.

Herein described is a lithium titanium oxide obtainable by a method according to the present invention in its third aspect. The lithium titanium oxide may have a full width at half maximum at a (111) plane of 0.08054° to 0.10067° as measured by X-ray diffraction using a Cu Kα ray.

The negative active material for a rechargeable lithium battery according to the present invention shows an excellent high-rate charge characteristic, a cycle-life characteristic, and stability.

Further embodiments of the present invention in any of its various aspects are as described below or as defined in the sub-claims.

A more complete appreciation of the present invention, and many of the attendant advantages thereof, will be readily apparent as the same becomes better understood by reference to the following detailed description when considered in conjunction with the accompanying drawings, wherein:

FIGURE 1 is a schematic view of a rechargeable lithium battery according to one embodiment of the present invention.

The negative active material for a rechargeable lithium battery according to the first aspect of the present invention includes lithium titanium oxide that has a full width at half maximum (FWHM) of 2θ ranging from 0.08054° to 0.10067° at a (111) plane (main peak, 2θ = 18.330°) as measured by XRD using a Cu Kα ray.

The lithium titanium oxide may be represented by the following chemical formula (I):

Chemical Formula (I) $Li_{4-x-y}M_yTi_{5+x-z}M'_zO_{12}$

In the above chemical formula (II), M is selected from La, Tb, Gd, Ce, Pr, Nd, Sm, Ba, Sr, Ca, Mg, or combinations thereof; M' is selected from V, Cr, Nb, Fe, Ni, Co, Mn, W, Al, Ga, Cu or combinations thereof; and x is from 0 to 1, y is from 0 to 1, and z is from 0 to 1.

Due to the spinel structure of the lithium titanium oxide, the exchange of a small part of lithium or titanium with the other transition metals does not change the XRD peak of this spinel structure compound.

The lithium titanium oxide may be at least one selected from the group consisting of $Li_{3.9}Mg_{0.1}Ti_5O_{12}$, $Li_4Ti_{4.8}V_{0.2}O_{12}$, $Li_4Ti_{4.8}Nb_{0.2}O_{12}$, $Li_4Ti_{4.8}Mo_{0.2}O_{12}$, and $Li_4Ti_{4.8}P_{0.2}O_{12}$. However, the present invention is not intended to be limited to the foregoing lithium titanium oxides but includes lithium titanium oxides of formula (I) containing other metals or transition metals M or M'. In an embodiment, the lithium titanium oxide includes Al, Mg, Cr or combinations thereof.

The lithium titanium oxide may be represented by the following chemical formula (II).

Chemical Formula (II) $Li_{4-x}Ti_{5+x}O_{12}$

In the above chemical formula (II), x ranges from 0 to 1.

The lithium titanium oxide may be $Li_4Ti_5O_{12}$.

The lithium titanium oxide may have an average crystal size ranging from 80 nm (800Å) to 100 nm (1000Å). According to one embodiment, the lithium titanium oxide may have an average crystal size ranging from 85 nm (850Å) to 95 nm (950Å.).

The lithium titanium oxide according to the present invention has a FWHM ranging from 0.08054° to 0.10067°, and according to an embodiment, the lithium titanium oxide has a FWHM ranging from 0.08477° to 0.09475°. According to another embodiment, the lithium titanium oxide may have a FWHM ranging from 0.0882° to 0.0986°. When the lithium titanium oxide has a FWHM lying within these ranges, a rechargeable lithium battery including the lithium titanium oxide may improve the initial capacity and the efficiency characteristic.

In order to calculate the FWHM, the lithium titanium oxide is firstly measured for a XRD peak using Cu Kα ray. The XRD may be measured by a D8 Advance™ (Bruker) under the measuring condition of a scan rate of about 0.2°/min to about 10°/min, measuring range of about 0° to about 90°, a tube voltage of about 20 kV to about 90 kV, and a tube current of about 20 mA to about 100 mA..

According to one embodiment, the lithium titanium oxide has a main peak of a (111) plane around about 18.330° when it is measured for the XRF peak according to the method. The FWHM may be obtained from a (111) plane peak around about 18.330° which is a main peak of XRD according to Lorentzian Fit method.

According to one embodiment, the lithium titanium oxide has an average crystal size ranging from 80 nm (800Å) to 100 nm (1000Å). According to another embodiment, the lithium titanium oxide has an average crystal size ranging from 85 nm (850Å) to 95 nm (950Å). When the lithium titanium oxide has the ranged crystal size, it is possible to provide

a rechargeable lithium battery which is safe, is capable of being charged quickly, and has a long cycle-life.

The crystal size of the lithium titanium oxide may be calculated by Scherer Equation shown in the following Equation 1 after taking a FWHM from the obtained XRD peak.

[Equation 1]

$$t = 0.9\lambda/B\cos\theta_B$$

In the above Equation 1, t refers to a particle size, $\lambda$ refers to a wavelength, B refers to FWHM, and $\theta_B$ refers to a peak position.

When the lithium titanium oxide has a FWHM ranging from 0.08054° to 0.10067°, the average crystal size of the lithium titanium oxide may range from 80 to 100 nm (800 to 1000Å). In addition, when the lithium titanium oxide has a FWHM ranging from 0.08477° to 0.09475°, the average crystal size of the lithium titanium oxide may range from 85 to 95 nm (850 to 950Å).

According to an embodiment, a method of preparing a negative active material for a rechargeable lithium battery includes heating a lithium raw material and a titanium raw material at 800 °C to 850 °C under the inert atmosphere to provide a lithium titanium oxide.

The lithium raw material may include $Li_2CO_3$, LiOH, LiCl, $LiNO_3$, or the like, but is not limited thereto. The titanium raw material may include $TiO_2$ $TiCl_4$ or combinations thereof, but is not limited thereto.

According to an embodiment, the lithium raw material and the titanium raw material may be heated at greater than 800 °C to 850 °C under an inert atmosphere. According to another embodiment, the lithium raw material and the titanium raw material may be heated at about 810 °C to about 840 °C under an inert atmosphere. The lithium raw material and the titanium raw material may be heated at about 805°C, about 810°C, about 815°C, about 820°C, about 825°C, about 830°C, about 835°C, about 840°C, about 845°C, or about 850°C under an inert atmosphere. When they are heated within the ranges, the crystallinity of the obtained lithium titanium oxide is improved resulting in providing a rechargeable lithium battery with enough initial capacity and efficiency.

The heat treatment may be carried out at the ranged temperature for 5 to 10 hours in order to provide a lithium titanium oxide having a FWHM of 2$\theta$ ranging from 0.08054° to 0.10067° at a (111) plane as measured by X-ray diffraction (XRD) using a Cu K$\alpha$-ray. The period for the heat treatment may be adjusted depending upon the heat treatment temperature. When the heat treatment temperature is changed into a relatively higher temperature from 800 °C to 850 °C, the heating period may be shortened.

The heat treatment may be carried out under the inert atmosphere selected from the group consisting of nitrogen, argon and combinations thereof.

The average crystal size of lithium titanium oxide obtained from the heating treatment is increased into 80 to 100 nm (800 to 1000Å), so the rechargeable lithium battery including a negative active material of the lithium titanium oxide improves the charge and discharge characteristics such as initial capacity, efficiency, and high-rate discharge characteristics.

In addition, when the crystallinity of the obtained lithium titanium oxide is degenerated, the obtained lithium titanium oxide may be re-heated to improve the crystallinity. When the lithium titanium oxide is re-heated for improving the crystallinity, it may be carried out under the same heat treatment condition as in the method of preparing the lithium titanium oxide. For example, the re-heating may be carried out a temperature of 800 to 850°C, or greater than 800 to 850°C, and for a period of time of 5 to 10 hours.

As described above, as the crystallinity of the lithium titanium oxide affects on the charge and discharge characteristics of rechargeable lithium battery, it is confirmed that when the lithium titanium oxide having a high crystallinity is used for the precursor, the rechargeable lithium battery including the lithium titanium oxide obtained after the heating treatment less improves or does not improve initial capacity, efficiency, and high-rate discharge characteristic; on the other hand, when an amorphous lithium titanium oxide is used for the precursor, the rechargeable lithium battery including the lithium titanium oxide obtained after the heating treatment improves initial capacity, efficiency, and high-rate discharge characteristic.

According to an embodiment, a rechargeable lithium battery is provided. The rechargeable lithium battery includes a negative electrode including a negative active material of lithium titanium oxide having FWHM ranging from 0.08054° to 0.10067°, a positive electrode including a positive active material, and a non-aqueous electrolyte. The negative electrode includes a current collector and a negative active material layer formed on the current collector. The negative active material layer includes the negative active material according to the embodiment of the present invention, a binder and selectively a conductive material. The negative active material of the negative active material layer is the same as described above.

The binder improves binding properties of the negative active material particles to each other and to a current collector. Examples of the binder include at least one selected from the group consisting of polyvinyl alcohol, carboxymethyl cellulose, hydroxypropyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

Any electrically conductive material may be used as a conductive material if it provides conductivity and does not cause a chemical change. Examples of the conductive material include natural graphite, artificial graphite, and the like. The conductive material may be used as a mixture with a polyphenylene derivative.

The current collector may be selected from the group consisting of a copper foil, a nickel foil, a stainless steel foil, a titanium foil, a nickel foam, a copper foam, a polymer substrate coated with a conductive metal, and combinations thereof.

In the rechargeable lithium battery, the positive electrode includes a current collector and a positive active material layer disposed on the current collector. The positive active material includes lithiated intercalation compounds that reversibly intercalate and deintercalate lithium ions. The positive active material may include a composite oxide including at least one selected from the group consisting of cobalt, manganese, and nickel, as well as lithium. In particular, the following lithium-containing compounds may be used:

$Li_aA_{1-b}X_bD_2$ ($0.90 \le a \le 1.8$, $0 \le b \le 0.5$); $Li_aE_{1-b}X_bO_{2-c}D_c$ ($0.90 \le a \le 1.8$, $0 \le b \le 0.5$, $0 \le c \le 0.05$); $LiE_{2-b}X_bO_{4-c}Dc$ ($0 \le b \le 0.5$, $0 \le c \le 0.05$); $Li_aNi_{1-b-c}Co_bX_cD_\alpha$ ($0.90 \le a \le 1.8$, $0 \le b \le 0.5$, $0 \le c \le 0.05$, $0 < \alpha \le 2$); $Li_aNi_{1-b-c}Co_bX_cO_{2-\alpha}T_\alpha$ ($0.90 \le a \le 1.8$, $0 \le b \le 0.5$, $0 \le c \le 0.05$, $0 < \alpha < 2$); $Li_aNi_{1-b-c}Co_bX_cO_{2-\alpha}T_2$ ($0.90 \le a \le 1.8$, $0 \le b \le 0.5$, $0 \le c \le 0.05$, $0 < \alpha < 2$); $Li_aNi_{1-b-c}Mn_bX_cD_\alpha$ ($0.90 \le a \le 1.8$, $0 \le b \le 0.5$, $0 \le c \le 0.05$, $0 < \alpha \le 2$); $Li_aNi_{1-b-c}Mn_bX_cO_{2-\alpha}T_\alpha$ ($0.90 \le a \le 1.8$, $0 \le b \le 0.5$, $0 \le c \le 0.05$, $0 < \alpha < 2$); $Li_aNi_{1-b-c}Mn_bX_cO_{2-\alpha}T_2$ ($0.90 \le a \le 1.8$, $0 \le b \le 0.5$, $0 \le c \le 0.05$, $0 < \alpha < 2$); $Li_aNi_bE_cG_dO_2$ ($0.90 \le a \le 1.8$, $0 \le b \le 0.9$, $0 \le c \le 0.5$, $0.001 \le d \le 0.1$); $Li_aNi_bCo_cMn_dGeO_2$ ($0.90 \le a \le 1.8$, $0 \le b \le 0.9$, $0 \le c \le 0.5$, $0 \le d \le 0.5$, $0.001 \le e \le 0.1$); $Li_aNiG_bO_2$ ($0.90 \le a \le 1.8$, $0.001 \le b \le 0.1$); $Li_aCoG_bO_2$ ($0.90 \le a \le 1.8$, $0.001 \le b \le 0.1$); $Li_aMnG_bO_2$ ($0.90 \le a \le 1.8$, $0.001 \le b \le 0.1$); $Li_aMn_2G_bO_4$ ($0.90 \le a \le 1.8$, $0.001 \le b \le 0.1$); $QO_2$; $QS_2$; $LiQS_2$; $V_2O_5$; $LiV_2O_5$; $LiZO_2$; $LiNiVO_4$; $Li_{(3-f)}J_2(PO_4)_3$ ($0 \le f \le 2$); $Li_{(3-f)}Fe_2(PO_4)_3$ ($0 \le f \le 2$); and $LiFePO_4$.

In the above formulas, A is selected from the group consisting of Ni, Co, Mn, and combinations thereof; X is selected from the group consisting of Al, Ni, Co, Mn, Cr, Fe, Mg, Sr, V, a rare earth element, and combinations thereof; D is selected from the group consisting of O, F, S, P, and combinations thereof; E is selected from the group consisting of Co, Mn and combinations thereof; T is selected from the group consisting of F, S, P, and combinations thereof; G is selected from the group consisting of Al, Cr, Mn, Fe, Mg, La, Ce, Sr, V, and combinations thereof; Q is selected from the group consisting of Ti, Mo, Mn, and combinations thereof; Z is selected from the group consisting of Cr, V, Fe, Sc, Y, and combinations thereof; and J is selected from the group consisting of V, Cr, Mn, Co, Ni, Cu, and combinations thereof.

The compound may have a coating layer on the surface, or may be mixed with another compound having a coating layer. The coating layer may include at least one coating element compound selected from the group consisting of an oxide of a coating element, a hydroxide, an oxyhydroxide of a coating element, an oxycarbonate of a coating element, and a hydroxyl carbonate of a coating element. The compound for a coating layer may be amorphous or crystalline. The coating element for a coating layer may include Mg, Al, Co, K, Na, Ca, Si, Ti, V, Sn, Ge, Ga, B, As, Zr, or mixtures thereof. The coating layer may be formed in a method having no adverse influence on properties of a positive active material by including these elements in the compound. For example, the method may include any coating method such as spray coating, dipping, and the like, but is not illustrated in more detail, since it is well-known to those who work in the related field.

The positive active material layer also includes a binder and a conductive material.

The binder improves binding properties of the positive active material particles to one another, and also with a current collector. Examples of the binder include at least one selected from the group consisting of polyvinylalcohol, carboxymethyl cellulose, hydroxypropyl cellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is included to improve electrode conductivity. Any electrically conductive material may be used as a conductive material unless it causes a chemical change. Examples of the conductive material include one or more of carbon black, acetylene black, ketjen black, carbon fiber, a metal powder or a metal fiber including copper, nickel, aluminum, silver, and the like. The conductive material may be used as a mixture with a polyphenylene derivative.

The current collector may be Al but is not limited thereto.

The negative and positive electrodes may be fabricated by a method including mixing the active material, a conductive material, and a binder into an active material composition and coating the composition on a current collector.

The electrode manufacturing method is well known, and thus is not described in detail in the present specification. The solvent may be N-methylpyrrolidone but it is not limited thereto.

In a rechargeable lithium battery according to one embodiment, a non-aqueous electrolyte includes a non-aqueous organic solvent and a lithium salt.

The non-aqueous organic solvent serves as a medium for transmitting ions taking part in the electrochemical reaction of the battery.

The non-aqueous organic solvent may include a carbonate-based, ester-based, ether-based, ketone-based, alcohol-based, or aprotic solvent. Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and so on. Examples of the ester-based solvent may include methyl acetate, ethyl acetate, n-propyl acetate, dimethylacetate, methylpropionate, ethylpropionate, γ-butyrolactone, decanolide, valerolactone, mevalonolactone, caprolactone, and so on. Examples of the ether-based solvent include dibutyl ether, tetraglyme, diglyme, dimethoxyethane, 2-methyltetrahydrofuran, tetrahydrofuran, and so on, and examples of the ketone-based solvent include cyclohexanone and so on. Examples of the alcohol-based solvent include ethyl alcohol, isopropyl alcohol, and so on, and examples of the aprotic solvent include nitriles such as R-CN (wherein R is a C2 to C20 linear, branched, or cyclic hydrocarbon, a double bond, an aromatic ring, or an ether bond), amides such as dimethylformamide, dioxolanes such as 1,3-dioxolane, sulfolanes, and so on.

The non-aqueous organic solvent may be used singularly or in a mixture. When the organic solvent is used in a mixture, the mixture ratio can be controlled in accordance with a desirable battery performance.

The carbonate-based solvent may include a mixture of a cyclic carbonate and a linear carbonate. The cyclic carbonate and the chain carbonate are mixed together in the volume ratio of about 1 : 1 to about 1 : 9, and when the mixture is used as an electrolyte, the electrolyte performance may be enhanced.

In addition, the electrolyte may further include mixtures of carbonate-based solvents and aromatic hydrocarbon-based solvents. The carbonate-based solvents and the aromatic hydrocarbon-based solvents may be mixed together in the volume ratio of about 1 : 1 to about 30 : 1.

The aromatic hydrocarbon-based organic solvent may be represented by the following Chemical Formula (III).

Chemical Formula (III)

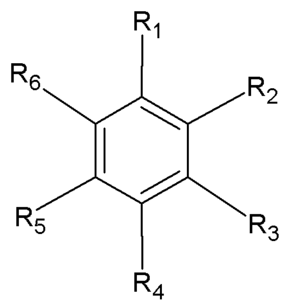

In the above Chemical Formula (III), $R_1$ to $R_6$ are independently hydrogen, a halogen, a C1 to C10 alkyl, a C1 to C10 haloalkyl, or combinations thereof.

The aromatic hydrocarbon-based organic solvent may include, but is not limited to, at least one selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, or combinations thereof.

The non-aqueous electrolyte may further include vinylene carbonate or an ethylene carbonate-based compound of the following Chemical Formula (IV).

Chemical Formula (IV)

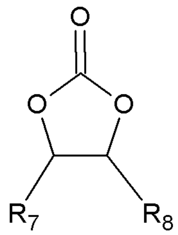

In the above Chemical Formula (IV), $R_7$ and $R_8$ are independently hydrogen, a halogen, a cyano (CN), a nitro (NO2), and a C1 to C5 fluoroalkyl, provided that at least one of $R_7$ and $R_8$ is a halogen, a nitro ($NO_2$), or a C1 to C5 fluoroalkyl and $R_7$ and $R_8$ are not simultaneously hydrogen. The unsaturated aromatic hydrocarbon group includes a phenyl group, and a cyclo 1,3-pentadiene group, whereas the unsaturated aliphatic hydrocarbon group includes an ethylene group, a propylene group, a butadiene group, a pentadiene group, and a hexatriene group.

The ethylene carbonate-based compound includes fluoroethylene carbonate, difluoro ethylenecarbonate, chloroethylene carbonate, dichloroethylene carbonate, bromoethylene carbonate, dibromoethylene carbonate, nitroethylene carbonate, cyanoethylene carbonate, and the like. The use amount of the additive for improving cycle life may be adjusted within an appropriate range.

The lithium salt supplies lithium ions in the battery, operates a basic operation of a rechargeable lithium battery, and improves lithium ion transport between positive and negative electrodes. Non-limiting examples of the lithium salt include at least one supporting salt selected from $LiPF_6$, $LiBF_4$, $LiSbF_6$, $LiAsF_6$, $LiN(SO_2C_2F_5)_2$, $Li(CF_3SO_2)_2N$, $LiC_4F_9SO_3$, $LiClO_4$, $LiAlO_2$, $LiAlCl_4$, $LiN(C_xF_{2x+1}SO_2)(C_yF_{2y+1}SO_2$(where x and y are natural numbers), LiCl, LiI and $LiB(C_2O_4)_2$(lithium bis(oxalato) borate; LiBOB). The lithium salt may be used at a 0.1 to 2.0M concentration. When the lithium salt is included at the above concentration range, electrolyte performance and lithium ion mobility may be enhanced due to optimal electrolyte conductivity and viscosity.

The rechargeable lithium battery may further include a separator between a negative electrode and a positive electrode, as needed. Non-limiting examples of suitable separator materials include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

FIGURE 1 is a schematic view of a representative structure of a rechargeable lithium battery. FIGURE 1 illustrates a cylindrical rechargeable lithium battery 1, which includes a positive electrode 2, a negative electrode 4, a separator 3 interposed between the positive electrode 2 and the negative electrode 4, an electrolyte (not shown) impregnating the separator 3, a battery case 5, and a sealing member 6 sealing the battery case 5.

The following examples illustrate this disclosure in more detail. These examples, however, should not in any sense be interpreted as limiting the scope of this disclosure.

(Example 1)

A Li material of $Li_2CO_3$ and a Ti material of $TiO_2$ were mixed in a mole ratio to be $Li_4Ti_5O_{12}$ and heated at about 800°C under a $N_2$ atmosphere for 5 hours to provide a $Li_4Ti_5O_{12}$ powder.

The obtained negative active material, a polyvinylidene fluoride binder, and a carbon black conductive material were mixed in a N-methylpyrrolidone solvent at a 90:5:5 weight ratio to provide a negative active material slurry. The negative active material slurry was coated on a Cu-foil current collector in accordance a general electrode manufacturing process to provide a negative electrode. The non-aqueous electrolyte was prepared by dissolving 1.0M $LiPF_6$ into a mixed solvent (3:7 volume ratio) of ethylene carbonate and ethylmethyl carbonate, and Li metal was used for a counter electrode to provide a coin-type a half-cell.

(Example 2)

A coin-type half-cell was manufactured in accordance with the same procedure as in Example 1, except that $Li_4Ti_5O_{12}$ was subjected to re-heating step at about 800°C under a $N_2$ atmosphere for 5 hours after heating step.

(Example 3)

A coin-type half-cell was manufactured in accordance with the same procedure as in Example 1, except that

$Li_4Ti_5O_{12}$ was prepared by heating for 10 hours.

(Example 4)

A coin-type half-cell was manufactured in accordance with the same procedure as in Example 1, except that $Li_4Ti_5O_{12}$ was subjected to re-heating step at about 800°C under a $N_2$ atmosphere for 10 hours after heating step.

(Example 5)

A coin-type half-cell was manufactured in accordance with the same procedure as in Example 1, except that $Li_4Ti_5O_{12}$ was prepared by heating at about 850°C.

(Example 6)

A coin-type half-cell was manufactured as in Example 1, except that $Li_4Ti_5O_{12}$ was prepared by heating at about 850°C for 8 hours.

(Example 7)

A coin-type half-cell was manufactured in accordance with the same procedure as in Example 1, except that $Li_4Ti_5O_{12}$ was prepared by heating at about 850°C for 10 hours.

(Comparative Example 1)

A rechargeable lithium cell was manufactured in accordance with the same procedure as in Example 1, except that $Li_4Ti_5O_{12}$ was prepared by heating at about 750°C for 10 hours.

(Comparative Example 2)

A coin-type half-cell was manufactured in accordance with the same procedure as in Example 1, except that $Li_4Ti_5O_{12}$ was prepared by heating at about 900°C for 5 hours.

(Comparative Example 3)

A coin-type half-cell was manufactured in accordance with the same procedure as in Example 1, except that $Li_4Ti_5O_{12}$ was subjected to re-heating step at about 900°C under a $N_2$ atmosphere for 5 hours after heating step.

**Measuring X-ray diffraction angle and calculating FWHM**

Each negative active material of lithium titanium oxide prepared from Examples and Comparative Examples was measured for X-ray diffraction angle 2θ. Using Cu Kα-ray, it was measured at a (111) plane (main peak, 2θ = 18.330°) by D8 Advance (Bruker) under the measuring condition of 40kV/40mA, 10 to 80° continuous mode scan, 0.02°/step, 0.5 second expose /step, a scan rate of 1.2°/minute. FWHM of lithium titanium oxide was calculated from the measured X-ray diffraction angle. In addition, the crystal size of the negative active material was measured. Table 1 shows the X-ray diffraction angle, FWHM, and crystal size.

TABLE 1

| | Heating temperature(°C)/ time(h) | Re-heating temperature(°C)/ time (h) | 2θ | FWHM(°) | crystal size(Å) |
|---|---|---|---|---|---|
| Example 1 | 800/5 | - | 18.348 | 0.09835 | 819 |
| Example 2 | 800/5 | 800/5 | 18.359 | 0.09472 | 851 |
| Example 3 | 800/10 | - | 18.377 | 0.09282 | 868 |
| Example 4 | 800/5 | 800/10 | 18.368 | 0.09205 | 875 |
| Example 5 | 850/5 | - | 18.378 | 0.09143 | 881 |

(continued)

| | Heating temperature(°C)/ time(h) | Re-heating temperature(°C)/ time (h) | 2θ | FWHM(°) | crystal size(Å) |
|---|---|---|---|---|---|
| Example 6 | 850/8 | -- | 18.346 | 0.08615 | 935 |
| Example 7 | 850/10 | - | 18.357 | 0.08435 | 955 |
| Comparati ve Example 1 | 750/10 | - | 18.375 | 0.10502 | 767 |
| Comparati ve Example 2 | 900/5 | - | 18.338 | 0.07915 | 1018 |
| Comparati ve Example 3 | 800/5 | 900/5 | 18.335 | 0.07862 | 1025 |

**Measuring Efficiency of Cell**

Each cell including the negative active material obtained from Examples and Comparative Examples was charged and discharged by changing the charge and discharge rates as shown in the following Table 2 to determine initial capacity, efficiency and high-rate discharge characteristics of the cell. The measured results are shown in Table 2.

| | | 0.1C | 0.2C | 0.5C | 1C | 2C | 5C | 10C | 20C |
|---|---|---|---|---|---|---|---|---|---|
| Ex. 1 | Discharge capacity (mAh/g) | 171.18 | 170.55 | 169.04 | 166.72 | 164.21 | 159.85 | 153.96 | 118.00 |
| | Charge & discharge efficiency (%) | 94.99 | 98.75 | 98.91 | 98.49 | 98.39 | 97.63 | 94.91 | 80.39 |
| Ex. 2 | Discharge capacity (mAh/g) | 171.47 | 170.61 | 169.74 | 168.23 | 166.34 | 162.31 | 155.80 | 120.38 |
| | Charge & discharge efficiency (%) | 95.15 | 98.76 | 98.95 | 98.56 | 98.42 | 97.84 | 95.69 | 81.76 |
| Ex. 3 | Discharge capacity (mAh/g) | 171.62 | 170.76 | 169.89 | 168.38 | 166.49 | 162.46 | 155.95 | 120.53 |
| | Charge & discharge efficiency (%) | 95.21 | 98.77 | 98.96 | 98.67 | 98.45 | 97.95 | 95.80 | 81.87 |
| Ex. 4 | Discharge capacity (mAh/g) | 171.76 | 170.89 | 170.25 | 169.78 | 167.95 | 165.32 | 162.05 | 130.27 |
| | Charge & discharge efficiency (%) | 96.03 | 98.88 | 99.05 | 98.73 | 98.51 | 98.06 | 95.95 | 82.06 |
| Ex. 5 | Discharge capacity (mAh/g) | 171.94 | 171.19 | 170.85 | 170.06 | 169.54 | 168.32 | 164.01 | 139.97 |
| | Charge & discharge efficiency (%) | 96.43 | 98.98 | 99.10 | 98.81 | 98.71 | 98.16 | 96.05 | 82.46 |

(continued)

| | | 0.1C | 0.2C | 0.5C | 1C | 2C | 5C | 10C | 20C |
|---|---|---|---|---|---|---|---|---|---|
| Ex. 6 | Discharge capacity (mAh/g) | 171.54 | 170.51 | 169.71 | 168.13 | 166.05 | 161.54 | 155.67 | 119.88 |
| | Charge & discharge efficiency (%) | 95.15 | 98.76 | 98.94 | 98.59 | 98.42 | 97.81 | 95.40 | 81.21 |
| Ex. 7 | Discharge capacity (mAh/g) | 170.56 | 169.03 | 167.73 | 165.79 | 163.77 | 159.56 | 155.69 | 115.90 |
| | Charge & discharge efficiency (%) | 93.35 | 98.68 | 98.74 | 98.26 | 98.06 | 97.58 | 94.48 | 77.12 |
| Comp. Ex. 1 | Discharge capacity (mAh/g) | 168.61 | 166.38 | 164.69 | 162.49 | 161.44 | 159.07 | 149.63 | 102.56 |
| | Charge & discharge efficiency (%) | 91.19 | 96.81 | 97.83 | 97.50 | 97.49 | 97.07 | 93.63 | 69.18 |
| Comp. Ex. 2 | Discharge capacity (mAh/g) | 168.18 | 164.82 | 163.73 | 162.44 | 160.91 | 158.49 | 149.57 | 100.32 |
| | Charge & discharge efficiency (%) | 87.2 | 96.75 | 97.40 | 97.37 | 97.33 | 96.43 | 91.05 | 62.59 |
| Comp. Ex. 3 | Discharge capacity (mAh/g) | 167.83 | 164.47 | 163.38 | 162.09 | 160.56 | 158.14 | 149.22 | 99.97 |
| | Charge & discharge efficiency (%) | 86.88 | 96.43 | 97.08 | 97.05 | 97.01 | 96.11 | 90.73 | 62.27 |
| In the Table, 1C = 170mAh/g | | | | | | | | | |

As shown in Table 2, it is confirmed that each rechargeable lithium cell including negative active material obtained from Examples 1 to 7 had initial discharge capacity of 170mAh/g or more which is much better than that of each rechargeable lithium cell including negative active material obtained from Comparative Examples 1 to 3. In addition, when the negative active material included lithium titanium oxide obtained from Examples 1 to 7 at 20C, the efficiency was 77% or more; and that of Comparative Examples 1 to 3 was less than 70%. Therefore, it is understood that the high-rate characteristics were improved compared to that in verse when lithium titanium oxide having a FWHM of 0.08054° to 0.10067° was included. Accordingly, when lithium titanium oxide had a FWHM ranging from 0.08054° to 0.10067°, the performance of rechargeable lithium cell is improved.

While the present invention has been described in connection with certain exemplary embodiments thereof, it is to be understood that the invention is not limited to the disclosed embodiments, but, on the contrary, is intended to cover various modifications and equivalent arrangements included within the scope of the appended claims.

## Claims

1. A negative electrode active material for a rechargeable lithium battery, the negative electrode active material comprising a lithium titanium oxide having a full width at half maximum (FWHM) at a (111) plane of 0.08054° to 0.10067°

as measured by X-ray diffraction using a Cu Kα ray.

2. A negative electrode active material as claimed in claim 1, wherein the lithium titanium oxide has a full width at half maximum at a (111) plane of 0.08477° to 0.09475° as measured by X-ray diffraction using a Cu Kα ray.

3. A negative electrode active material as claimed in claim 1, wherein the lithium titanium oxide has a full width at half maximum at a (111) plane of 0.0882° to 0.0986° as measured by X-ray diffraction using a Cu Kα ray.

4. A negative electrode active material as claimed in any one of claims 1 to 3, wherein the lithium titanium oxide comprises a lithium titanium oxide represented by the chemical formula (I):

Chemical Formula (I) $Li_{4-x-y}M_yTi_{5+x-z}M'_zO_{12}$

wherein M is selected from La, Tb, Gd, Ce, Pr, Nd, Sm, Ba, Sr, Ca, Mg, or combinations thereof; M' is selected from V, Cr, Nb, Fe, Ni, Co, Mn, W, Al, Ga, Cu or combinations thereof; and x is from 0 to 1, y is from 0 to 1, and z is from 0 to 1.

5. A negative active material as claimed in any one of claims 1 to 4, wherein the lithium titanium oxide comprises a lithium titanium oxide represented by chemical formula (II):

Chemical Formula (II) $Li_{4-x}Ti_{5+x}O_{12}$

where $0 \leq x \leq 1$.

6. A negative active material as claimed in any one of claims 1 to 5, wherein the lithium titanium oxide comprises $Li_4Ti_5O_{12}$.

7. A negative active material as claimed in any one of claims 1 to 6, wherein the lithium titanium oxide has an average crystal size of 80 nm (800Å) to 100 nm (1000Å).

8. A negative electrode active material as claimed in claim 1, wherein the lithium titanium oxide has an average crystal size of 85 nm (850Å) to 95 nm(950Å).

9. A rechargeable lithium battery comprising a negative electrode active material as claimed in any one of the preceding claims.

10. A method for preparing a negative electrode active material for a rechargeable battery as defined in any one of claims 1-8, comprising a lithium titanium oxide which comprises heating a lithium titanium oxide precursor at a temperature of 800 to 850°C under an inert atmosphere to provide a lithium titanium oxide, wherein the lithium titanium oxide precursor is heated for 5 to 10 hours under the inert atmosphere..

11. A method as claimed in claim 10, which further comprises mixing a lithium-containing material and a titanium-containing material to form the lithium titanium oxide precursor.

12. A method as claimed in claim 10, wherein the lithium titanium oxide precursor is an amorphous lithium titanium oxide.

13. A method as claimed in any one of claims 10 to 12, wherein the lithium-containing material is selected from the group consisting of $Li_2CO_3$, LiOH, LiCl and $LiNO_3$.

14. A method as claimed in any one of claims 10 to 13, wherein the titanium-containing material is selected from the group consisting of $TiO_2$ $TiCl_4$ and combinations thereof.

15. A method as claimed in any one of claims 10 to 14, wherein the lithium titanium oxide precursor is heated under an inert atmosphere selected from the group consisting of nitrogen, argon and combinations thereof.

16. A method as claimed in any one of claims 10 to 15, wherein further comprising re-heating the obtained lithium titanium oxide at a temperature of 800 to 850°C for 5 to 10 hours under the inert atmosphere.

## Patentansprüche

1. Negativ-Elektroden-Aktivmaterial für eine aufladbare Lithiumbatterie, das Negativ-Elektroden-Aktivmaterial umfassend ein Lithiumtitanoxid, welches gemessen durch Röntgendiffraktion mittels Cu-Kα-Strahlung eine Halbwertsbreite (FWHM) an einer (111)-Ebene von 0,08054° bis 0,10067° aufweist.

2. Negativ-Elektroden-Aktivmaterial nach Anspruch 1, wobei das Lithiumtitanoxid gemessen durch Röntgendiffraktion mittels Cu-Kα-Strahlung eine Halbwertsbreite an einer (111)-Ebene von 0,08477° bis 0,09475° aufweist.

3. Negativ-Elektroden-Aktivmaterial nach Anspruch 1, wobei das Lithiumtitanoxid gemessen durch Röntgendiffraktion mittels Cu-Kα-Strahlung eine Halbwertsbreite an einer (111)-Ebene von 0,0882° bis 0,0986° aufweist.

4. Negativ-Elektroden-Aktivmaterial nach einem der Ansprüche 1 bis 3, wobei das Lithiumtitanoxid ein durch die chemische Formel (I) dargestelltes Lithiumtitanoxid umfasst:

Chemische Formel (I) $Li_{4-x-y}M_yTi_{5+x-z}M'_zO_{12}$

wobei M gewählt ist aus La, Tb, Gd, Ce, Pr, Nd, Sm, Ba, Sr, Ca, Mg oder Kombinationen derselben; M' gewählt ist aus V, Cr, Nb, Fe, Ni, Co, Mn, W, Al, Ga, Cu oder Kombinationen derselben; und x im Bereich von 0 bis 1 liegt, y im Bereich von 0 bis 1 liegt und z im Bereich von 0 bis 1 liegt.

5. Negativ-Aktivmaterial nach einem der Ansprüche 1 bis 4, wobei das Lithiumtitanoxid ein durch die chemische Formel (II) dargestelltes Lithiumtitanoxid umfasst:

Chemische Formel (II) $Li_{4-x}Ti_{5+x}O_{12}$

wobei $0 \leq x \leq 1$.

6. Negativ-Aktivmaterial nach einem der Ansprüche 1 bis 5, wobei das Lithiumtitanoxid $Li_4Ti_5O_{12}$ umfasst.

7. Negativ-Aktivmaterial nach einem der Ansprüche 1 bis 6, wobei das Lithiumtitanoxid eine durchschnittliche Kristallgröße von 80 nm (800 A) bis 100 nm (1000 A) aufweist.

8. Negativ-Elektroden-Aktivmaterial nach Anspruch 1, wobei das Lithiumtitanoxid eine durchschnittliche Kristallgröße von 85 nm (850 Å) bis 95 nm (950 Å) aufweist.

9. Aufladbare Lithiumbatterie, umfassend ein Negativ-Elektroden-Aktivmaterial nach einem der vorhergehenden Ansprüche.

10. Verfahren zur Herstellung eines Negativ-Elektroden-Aktivmaterials für eine aufladbare Lithiumbatterie nach einem der Ansprüche 1 bis 8, umfassend ein Lithiumtitanoxid, welches umfasst: Erhitzen eines Lithiumtitanoxid-Vorläufers bei einer Temperatur von 800 bis 850 °C unter Inertgasatmosphäre zur Bereitstellung eines Lithiumtitanoxids, wobei der Lithiumtitanoxid-Vorläufer für 5 bis 10 Stunden unter der Inertgasatmosphäre erhitzt wird.

11. Verfahren nach Anspruch 10, welches ferner umfasst: Mischen eines Lithiumenthaltenden Materials und eines Titan-enthaltenden Materials zur Bildung des Lithiumtitanoxid-Vorläufers.

12. Verfahren nach Anspruch 10, wobei der Lithiumtitanoxid-Vorläufer ein amorphes Lithiumtitanoxid ist.

13. Verfahren nach einem der Ansprüche 10 bis 12, wobei das Lithium-enthaltende Material aus der Gruppe gewählt ist, die aus $Li_2CO_3$, LiOH, LiCl und $LiNO_3$ besteht.

14. Verfahren nach einem der Ansprüche 10 bis 13, wobei das Titan-enthaltende Material aus der Gruppe gewählt ist, die aus $TiO_2$, $TiCl_4$ und Kombinationen derselben besteht.

15. Verfahren nach einem der Ansprüche 10 bis 14, wobei der Lithiumtitanoxid-Vorläufer unter einer Inertgasatmosphäre wieder erhitzt wird, die aus der Gruppe gewählt ist, die aus Stickstoff, Argon und Kombinationen derselben besteht.

16. Verfahren nach einem der Ansprüche 10 bis 15, wobei dieses ferner umfasst:

Wiedererhitzen des gewonnenen Lithiumtitanoxids für 5 bis 10 Stunden bei einer Temperatur von 800 bis 850 °C unter der Inertgasatmosphäre.

**Revendications**

1. Matériau actif d'électrode négative pour une batterie au lithium rechargeable, le matériau actif d'électrode négative comprenant un oxyde de lithium et de titane ayant une largeur à mi-hauteur (FWHM) au niveau d'un plan (111) de 0,08054° à 0,10067°, telle que mesurée par une diffraction des rayons X utilisant un rayon Cu K$\alpha$.

2. Matériau actif d'électrode négative selon la revendication 1, dans lequel l'oxyde de lithium et de titane a une largeur à mi-hauteur au niveau d'un plan (111) de 0,08477° à 0,09475°, telle que mesurée par une diffraction des rayons X utilisant un rayon Cu K$\alpha$.

3. Matériau actif d'électrode négative selon la revendication 1, dans lequel l'oxyde de lithium et de titane a une largeur à mi-hauteur au niveau d'un plan (111) de 0,0882° à 0,0986°, telle que mesurée par une diffraction des rayons X utilisant un rayon Cu K$\alpha$.

4. Matériau actif d'électrode négative selon l'une quelconque des revendications 1 à 3, dans lequel l'oxyde de lithium et de titane consiste en un oxyde de lithium et de titane représenté par la formule chimique (I) :

Formule chimique (I) $Li_{4-x-y}M_yTi_{5+x-z}M'_zO_{12}$

dans laquelle M est choisi parmi La, Tb, Gd, Ce, Pr, Nd, Sm, Ba, Sr, Ca, Mg et leurs combinaisons ; M' est choisi parmi V, Cr, Nb, Fe, Ni, Co, Mn, W, Al, Ga, Cu et leurs combinaisons ; et x vaut de 0 à 1, y vaut de 0 à 1, et z vaut de 0 à 1.

5. Matériau actif d'électrode négative selon l'une quelconque des revendications 1 à 4, dans lequel l'oxyde de lithium et de titane consiste en un oxyde de lithium et de titane représenté par la formule chimique (II) :

Formule chimique (II) $Li_{4-x}Ti_{5+x}O_{12}$

dans laquelle $0 \leq x \leq 1$.

6. Matériau actif d'électrode négative selon l'une quelconque des revendications 1 à 5, dans lequel l'oxyde de lithium et de titane consiste en $Li_4Ti_5O_{12}$.

7. Matériau actif d'électrode négative selon l'une quelconque des revendications 1 à 6, dans lequel l'oxyde de lithium et de titane a une taille cristalline moyenne de 80 nm (800 Å) à 100 nm (1000 Å).

8. Matériau actif d'électrode négative selon la revendication 1, dans lequel l'oxyde de lithium et de titane a une taille cristalline moyenne de 85 nm (850 Å) à 95 nm (950 Å).

9. Batterie au lithium rechargeable comprenant un matériau actif d'électrode négative selon l'une quelconque des revendications précédentes.

10. Procédé pour préparer un matériau actif d'électrode négative pour une batterie rechargeable tel que défini dans l'une quelconque des revendications 1 à 8, comprenant un oxyde de lithium et de titane, qui comprend le chauffage d'un précurseur d'oxyde de lithium et de titane à une température de 800 à 850°C dans une atmosphère inerte pour donner un oxyde de lithium et de titane, dans lequel le précurseur de lithium et de titane est chauffé pendant 5 à 10 heures dans l'atmosphère inerte.

11. Procédé selon la revendication 10, qui comprend en outre le mélange d'un matériau contenant du lithium et d'un matériau contenant du titane pour former le précurseur d'oxyde de lithium et de titane.

12. Procédé selon la revendication 10, dans lequel le précurseur d'oxyde de lithium et de titane est un oxyde de lithium et de titane amorphe.

13. Procédé selon l'une quelconque des revendications 10 à 12, dans lequel le matériau contenant du lithium est choisi dans l'ensemble constitué par $Li_2CO_3$, LiOH, LiCl et $LiNO_3$.

14. Procédé selon l'une quelconque des revendications 10 à 13, dans lequel le matériau contenant du titane est choisi dans l'ensemble constitué par $TiO_2$, $TiCl_4$ et leurs combinaisons.

15. Procédé selon l'une quelconque des revendications 10 à 14, dans lequel le précurseur d'oxyde de lithium et de titane est chauffé dans une atmosphère inerte choisie dans l'ensemble constitué par l'azote, l'argon et leurs combinaisons.

16. Procédé selon l'une quelconque des revendications 10 à 15, comprenant en outre de nouveau un chauffage de l'oxyde de lithium et de titane obtenu, à une température de 800 à 850°C pendant 5 à 10 heures dans l'atmosphère inerte.

FIG.1

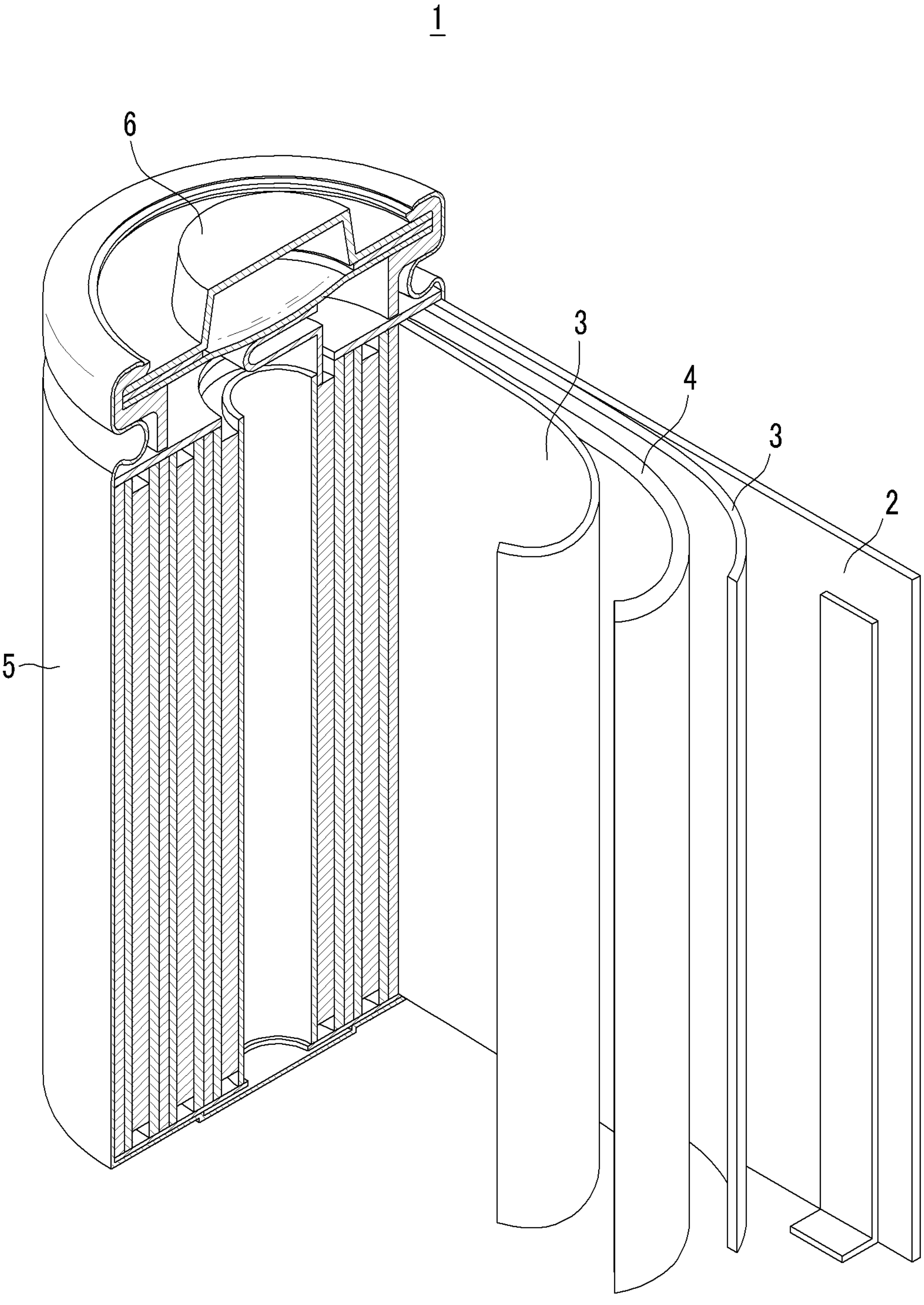

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **ALLEN et al.** Low temperature performance of nanophase Li4Ti5O. *Journal of Power Sources,* vol. 159, 1340-1345
- **JIANQIU DENG et al.** Preparation and electrochemical properties of Li4Ti5O. *Journal of Power Sources,* vol. 193, 816-821
- **SHEN et al.** Preparation and characterisation of nanocrystalline Li4Ti5O12 by sol-gel method. *Materials Chemistry and Physics,* vol. 78, 437-441